# EUROPÄISCHE PATENTSCHRIFT

(11) **EP 0 456 003 B1**
(45) Veröffentlichungstag und Bekanntmachung des Hinweises auf die Patenterteilung: **08.02.1995**
(21) Anmeldenummer: 91105845.1
(22) Anmeldetag: 12.04.1991
(51) Int. Cl.: B23B 45/16, B25D 16/00

(54) **Handbohrmaschine**
Hand-held-drilling machine
Perceuse manuelle

(30) Priorität: 08.05.1990 DE 4014633; 12.02.1991 DE 4104131
(43) Veröffentlichungstag der Anmeldung: 13.11.1991
(60) Teilanmeldung: 94108513.6
(73) Patentinhaber: ROBERT BOSCH GMBH, 70442 Stuttgart (DE)
(72) Erfinder: Reibetanz, Wilbert, Dipl.-Ing., W-7022 Leinfelden-E. 1 (DE); Wanner, Karl, Dr.-Ing., W-7022 Leinfelden-E. 2 (DE); Baumann, Otto, W-7022 Leinfelden-E. 2 (DE); Müller, Rolf, Dipl.-Ing., W-7022 Leinfelden-E. (DE)

(56) Entgegenhaltungen:
- EP-A- 0 108 411
- DE-A- 3 333 856
- DE-A- 3 626 474
- DE-C- 3 510 711
- US-A- 4 619 460

## Beschreibung

Die Erfindung geht aus von einer Handbohrmaschine nach der Gattung des Anspruchs 1.

Aus der EP-A 108 411 ist bereits eine solche Handbohrmaschine bekannt, die zwei Verriegelungskugeln im Bereich des Spannbereichs der Futterbacken aufweist. Die Verriegelungskugeln werden beim Einsetzen eines Nutenschaftwerkzeugs von einer Haltehülse mit abgeschrägter Wand gehalten. Diese Konstruktion bietet jedoch keine ausreichende Sicherheit dafür, daß die Verriegelungskugeln beim unbeabsichtigten Herausziehen des Werkzeugs nicht entlang der schrägen Wand zurückweichen und dieses freigeben. Daraus resultiert jedoch z.B. bei im Werkstück festgeklemmtem Werkzeug eine Unfallgefahr, wenn sich das Werkzeug plötzlich von der Maschine löst. Andererseits kann es aber wegen der relativ großen Reibung der Kugeln an der schrägen Wand auch beim Einsetzen des Werkzeugs zum Klemmen der Kugel kommen, so daß ein Einsetzen des Werkzeugs und anschließendes automatisches Verriegeln nicht möglich ist. Als weiterer Nachteil kommt hinzu, daß mit dieser Schlagbohrhalterung die marktüblichen Nutenschaftwerkzeuge mit zwei offenen und zwei geschlossenen Nuten am Schaft nicht sicher aufgenommen werden können. Wenn die Verriegelungskugeln in die offenen Nuten einrasten, läßt sich das Werkzeug nicht verriegeln und kann leicht aus der Halterung herausfallen.

Aus der DE-C-3 510 711 ist ferner eine Handbohrmaschine mit einem Bohrfutter bekannt, welches gemäß dem Gattungsbegriff des Anspruchs 1 mit zwei hintereinanderliegenden Werkzeugaufnahmen versehen ist. Die vordere Werkzeugaufnahme ist ein Backenfutter mit drei konisch nach vorn zulaufenden Spannbacken und die hintere Werkzeugaufnahme ist für bohr und/oder schlagende Werkzeuge mit einen Nutenschaft vorgesehen, wobei diese Werkzeugaufnahme einerseits eine feststehende Drehmitnahmeleiste und andererseits einen radial verschiebbaren Mitnehmer aufweist, der zur Axialverriegelung des Werkzeugschaftes in einer am Werkzeugschaftende geschlossenen Nut eingreift. Dieser Mitnehmer ist jedoch in Ruhestellung durch ein Sperrelement axial verriegelt, welches an einem von außen von Hand gegen eine Druckfeder axial verschiebbaren Stellring bzw. einer Betätigungshülse als Bedienungshandhabe angeformt ist. Diese Lösung hat jedoch den Nachteil, daß ein Nutenschaftwerkzeug erst dann in die hintere Werkzeugeaufnahme eingeschoben werden kann, wenn zuvor die Handhabe zurückgeschoben wird um den Mitnehmer radial zu entriegeln.

### Vorteile der Erfindung

Die erfindungsgemäße Handbohrmaschine mit den kennzeichnenden Merkmalen des Anspruchs 1 hat demgegenüber den Vorteil, daß das Einsetzen vereinfacht und das automatische Verriegeln sowie das Halten von Nutenschaftwerkzeugen funktionssicherer wird und die Gefahr von Fehlbedienungen ausgeschlossen wird. Insbesondere ist auch die Anbringung von Mitteln zur Drehmitnahme für Werkzeuge mit offen ausmündenden Drehmitnahmenuten möglich. Die korrekte Drehlage des Werkzeugs wird beim Einsetzen durch einfaches Drehen des Werkzeugs mühelos und sicher gefunden. Die weitere Werkzeugaufnahme ist dabei nahe genug an der Einsteckseite der Werkzeughalterung angeordnet damit eine dort angebrachte Staubschuzkappe noch im Bereich des für alle Bohrerdurchmesser gleich dicken Nutenschaftes abdichtet. Weitere Vorteile sind in den geringen radialen und axialen Abmessungen der Werkzeughalterung und in den verbesserten Rundlaufeigenschaften zu sehen.

Durch die in den abhängigen Ansprüchen aufgeführten Maßnahmen sind vorteilhafte Weiterbildungen und Verbesserungen der im Anspruch 1 angegebenen Handbohrmaschine möglich.

### Zeichnung

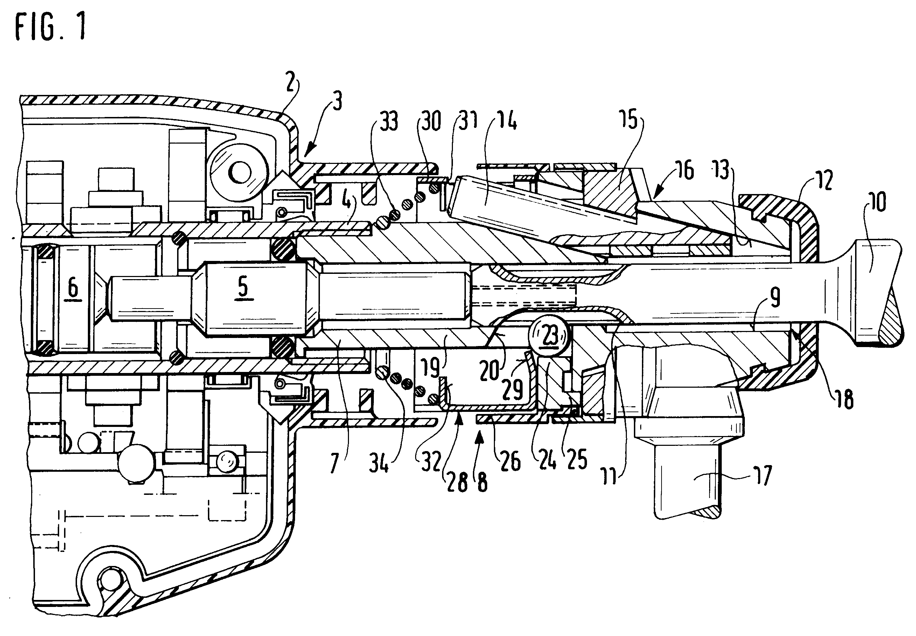

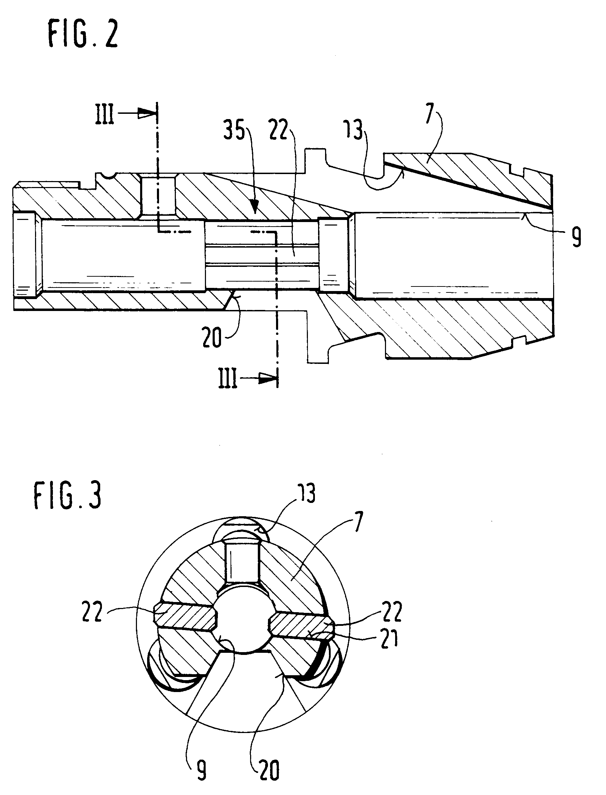

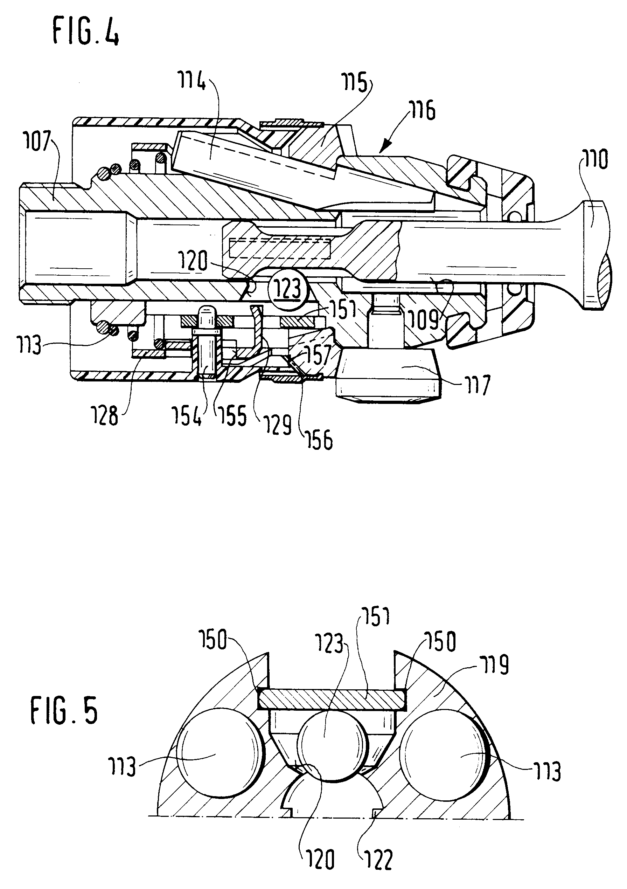

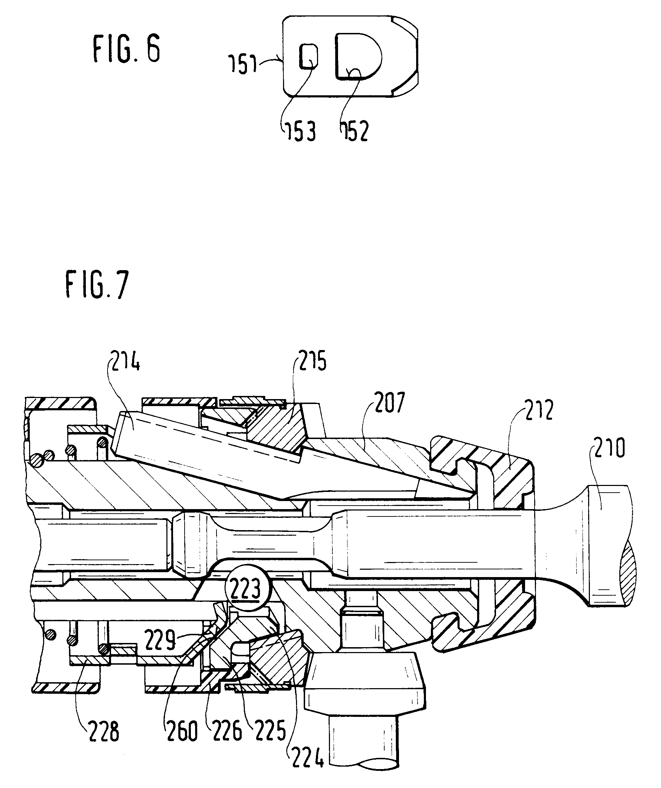

Drei Ausführungsbeispiele der Erfindung sind in der Zeichnung dargestellt und in der nachfolgenden Beschreibung näher erläutert. Figur 1 zeigt einen Schnitt durch den vorderen Teil eines Bohrhammers. Figur 2 zeigt in Einzeldarstellung einen Grundkörper einer Werkzeughalterung und Figur 3 einen Querschnitt gemäß Linie III-III in Figur 2. Die Figuren 4, 5 und 6 zeigen ein zweites Ausführungsbeispiel und Figur 7 ein drittes Ausführungsbeispiel.

### Beschreibung des Ausführungsbeispiels

Ein Bohrhammer weist ein zweischaliges Gehäuse 2 auf, in dem ein nicht gezeigter Motor und ein Schlagwerk 3 untergebracht sind. Der Motor treibt eine rohrförmige Hammerhülse 4 an, die das Schlagwerk 3 umgibt. Von dem Schlagwerk 3 ist ein Döpper 5 gezeigt, der von einem Schläger 6 periodisch beaufschlagt wird. Statt des gezeigten Schlagwerks kann ebensogut ein Rasten- oder ein Federschlagwerk Verwendung finden.

Mit der Hammerhülse 4 ist ein Grundkörper 7 einer Werkzeughalterung 8 fest und spielfrei verbunden bzw. verschraubt. In Verlängerung des Döppers 5 weist der Grundkörper 7 eine Aufnahmebohrung 9 zum Einsetzen von Bohr- und/oder Schlagwerkzeugen 10 auf. Diese weisen als Nutenschaftwerkzeuge 10 am Schaft beidseitig geschlossene Verriegelungsnuten 11 auf. An seinem dem Schlagwerk 3 abgewandten vorderen Ende hat der Grundkörper 7 eine Staubschutzkappe 12. In seinem vorderen Bereich weist der Grundkörper 7 drei schräg nach vorne innen zulaufende Führungsbahnen 13 für drei bewegliche Spannbacken 14 auf (siehe auch Figur 2). Die Spannbacken 14 sind in üblicher Weise an ihrer Rückseite verzahnt und mittels eines Zahnkranzes 15 verstellbar. Die Teile 7 und 13 bis 15 bilden zusammen ein Backenfutter 16. Rundschaftwerkzeuge sind darin mittels eines Bohrfutterschlüssels 17 spannbar. Der Spannbereich des Backenfutters 16 liegt, der Einsteckseite 18 der Werkzeughalterung 8 nächstgelegen, dort, wo die Spannbacken 14 auf den Werkzeugschaft auftreffen.

Von der Einsteckseite 18 her gesehen hinter dem Spannbereich des Backenfutters 16 weist der Grundkörpers 7 ein rückwärtiges Rohrteil 19 auf. Dieses ist an einer Seite in Längsrichtung abgeflacht. Auf der abgeflachten Seite hat der Grundkörper 7 in unmittelbarer Nähe des Zahnkranzes 15 einen mit der Aufnahmebohrung 9 in Verbindung stehenden Längsschlitz 20. Außerdem weist der Grundkörper 7 im Bereich des Längsschlitzes 20 zwei weitere gegenüberliegende Längsausnehmungen 21 auf, die gegenüber der Mittellinie des offenen Längsschlitzes 20 um etwa 90 Grad versetzt angeordnet sind. Darin befinden sich vorzugsweise gehärtete leistenförmige Einsätze 22, deren in die Aufnahmebohrung 9 hervorstehender Teil trapezförmig geformt ist. Die Einsätze 22 dienen der Drehmitnahme des eingesetzten Nutenschaftwerkzeugs 10 und halten mit ihren über den Grundkörper 7 hinausstehenden Enden gleichzeitig eine Verdrehsicherung für die Schiebehülse 25 und die Haltehülse 28. In dem Längsschlitz 20 befindet sich ein Verriegelungskörper 23, der als Kugel oder Walze ausgebildet sein kann. Der Verriegelungskörper 23 wird in seiner in Figur 1 gezeigten Verriegelungsstellung in radialer Richtung von einem Sperrelement 24 überdeckt. Dieses ist als Nase an einer Schiebehülse 25 angebracht, die an ihrem Umfang mit einer Betätigungshülse 26 aus Kunststoff versehen ist und nach vorne an dem Zahnkranz 15 anliegt. Nach hinten in Richtung auf das Schlagwerk 3 liegt an der Schiebehülse 25 eine Haltehülse 28 an. Die Haltehülse 28 weist eine Nase 29 auf, die im Bereich der abgeflachten Seite des Grundkörpers 7 radial nach innen über das Sperrelement 24 der Schiebehülse 25 hervorsteht. Die aus Blech gestanzte und gerollte Haltehülse 28 besteht aus einem langgestreckten rohrförmigen Körper 30, der bis über das hintere Ende der Spannbacken 14 hinausreicht. Er weist Durchbrüche 31 zum Durchtritt der Spannbacken 14 auf. Hinter bzw. zwischen den Spannbacken 14 sind vom Körper 30 weg Lappen 32 nach innen gebogen. Gegen die Lappen 32 und den hinteren Teil des Körpers 30 ist eine Druckfeder 33 angelegt, die mit ihrem anderen Ende gegen einen in dem Grundkörper 7 angeordneten Sprengring 34 abgestützt ist. Die Teile 7 und 21 bis 28 bilden eine Werkzeugaufnahme 35 zum Halten von Nutenschaftwerkzeugen. Die Werkzeugaufnahme 35 ist unmittelbar hinter dem Spannbereich des Backenfutters 16 angeordnet.

Zum Drehbohren mit Rundschaftbohrern ohne Schlag werden diese Werkzeuge in das Backenfutter 16 eingesetzt und mit dem Bohrfutterschlüssel 17 gespannt. Wegen der festen Verbindung des Futter- bzw. Grundkörpers 7 mit der antreibenden Hammerhülse werden für Rundschaftbohrer hervorragende Rundlaufeigenschaften erzielt.

Zum Meißeln oder Schlagbohren werden Nutenschaftwerkzeuge wie zum Beispiel SDS-Plus Bohrer gemäß DE-PS 25 51 125 verwendet. Diese Werkzeuge werden bei geöffneten Spannbacken in die Aufnahmebohrung 9 eingeschoben und solange verdreht, bis die Nuten am Werkzeug in die leistenförmigen Einsätze 22 einrasten. Der Benutzer braucht also nicht auf die richtige Lage der Nuten des Werkzeugschaftes zur Werkzeughalterung zu achten, sondern findet die richtige Lage "blind" durch eine Drehung des Werkzeugs um maximal 180° . Beim weiteren Einschieben des Werkzeugs drückt das Schaftende den in dem Längsschlitz 21 befindlichen Verriegelungskörper 23 nach hinten. Dabei wird die Haltehülse 28 an ihrer Nase 29 ebenfalls nach hinten geschoben, wobei sie eine leichte Kippbewegung ausführt. Zwischen der Schiebehülse 25 und der Haltehülse 28 wird soviel Raum frei, daß die Kugel nach radial außen ausweichen kann, um das Schaftende des Werkzeugs 10 vorbeizulassen. Anschließend schnappt der Verriegelungskörper 23 in die geschlossene Verriegelungsnut 11 des Werkzeugs ein. Dies wird durch die Feder 33 bewirkt, die die Haltehülse 28 nach vorn drängt. In dieser Verriegelungsstellung überdeckt die Schiebehülse 25 den Verriegelungskörper 23 radial und die Haltehülse 28 sichert den Verriegelungskörper 23 mit ihrer Nase 29 in axialer Richtung.

Zum Entnehmen eines Nutenschaftwerkzeuges aus der Werkzeughalterung 8 wird mit der Betätigungshülse 26 die Schiebehülse 25 zum Bohrhammer hin zurückgezogen. Der Verriegelungskörper 23 ist nun radial frei und kann nach außen ausweichen, wenn das Werkzeug 10 herausgezogen wird. Danach drückt die Feder 33 die Haltehülse 28 und die Schiebehülse 25 in ihre Ausgangsposition zurück.

Das zweite Ausführungsbeispiel gemäß den Figuren 4 bis 6 ist prinzipiell wie die vorigen aufgebaut, gleichwirkende Bauteile sind mit gegenüber dem ersten Ausführungsbeispiel um 100 erhöhten Bezugszahlen bezeichnet. Ein Grundkörper 107 ist wiederum fest und spielfrei mit einer nicht gezeigten Hammerhülse verbunden. Aufnahmebohrung 109, Verriegelungsnuten 111, Staubschutzkappe 112 und Backenfutter 116 mit den Teilen 113 bis 115 entsprechen genau dem ersten Ausführungsbeispiel. Der Grundkörper 119 weist einen Längsschlitz 120 für einen Verriegelungskörper 123 auf. Im Bereich des Längsschlitzes 120 sind radial außerhalb von diesem Längsführungen 150 in dem Grundkörper 119 angeordnet. In den Längsführungen 150 ist ein plattenförmiger Gleitschieber 151 geführt. Dieser wirkt in seiner in Figur 6 gezeigten Ruhestellung als Sperrelement für den Verriegelungskörper 123, so daß dieser radial nicht ausweichen kann. Der Gleitschieber 151 weist in dem Bereich hinter dem Verriegelungskörper 123 eine Durchbrechung 152 auf, durch die eine Nase 129 einer Haltehülse 128 hindurchragt. Die Haltehülse 128 läßt sich im Gegensatz zu der des ersten Ausführungsbeispiels kostengünstig als gerolltes und verklinktes Blechteil fertigen. Ein teueres Fließpressteil (Schiebehülse 25) entfällt. Die Durchbrechung 152 ist so weit und so angeordnet, daß die Nase 129 in ihr nach hinten zum Bohrhammer zu axial verschieblich ist. Der Gleitschieber 151 weist außerdem noch eine Öffnung 153 auf, in die ein Stift 154 eingesetzt ist. Dieser ist an einer Schiebehülse 125 befestigt, so daß der Gleitschieber 151 bei einer Axialbewegung der Schiebehülse 125 mitgenommen wird. Der Stift 154 durchgreift die Haltehülse 128 in einem Langloch 155, so daß sich die Haltehülse 128 ohne Behinderung axial nach hinten verschieben läßt. Die Haltehülse 128 wird durch eine Druckfeder 133 in Richtung auf die Verriegelungskugel 123 gedrängt. Die Druckfeder 133 drängt gleichzeitig über die Haltehülse 128 und den Stift 154 die Schiebehülse 125 in ihre vordere Stellung, so daß eine an ihrer Stirnseite angebrachte Verzahnung 156 in eine rückwärtige Verzahnung 157 an dem Zahnkranz 115 eingreifen kann. Dadurch wird ein unbeabsichtigtes Verdrehen oder Lösen des Zahnkranzes 115 während des Schlagbohrbetriebs verhindert.

Die Funktion des zweiten Ausführungsbeispiels entspricht der der vorhergehenden Ausführungsbeispiele. Zum Entfernen eines Nutenschaft-Bohrwerkzeugs 110 wird die Schiebehülse 127 vom Werkzeug weg nach hinten gezogen, wobei der Gleitschieber 151 mitgenommen wird und die Verriegelungskugel 123 radial freigibt. Das Ausführungsbeispiel hat den Vorteil, daß die Fertigung der Schiebehülse erheblich vereinfacht werden und in Kunststoff ausgeführt werden kann. Der Gleitschieber ist ein einfaches Stanzteil, das billig zu fertigen und leicht zu montieren ist.

Das dritte Ausführungsbeispiel gemäß Figur 7 ist ähnlich dem ersten aufgebaut, gleichwirkende Bauteile sind mit um 200 erhöhten Bezugszahlen bezeichnet. Der Unterschied besteht nur darin, daß der Verriegelungskörper 223 noch weiter nach vorn bis in den Zahnkranz 215 hineinverlagert ist und die Schiebehülse 225 und die Haltehülse 228 eine neue Form aufweisen. Die Schiebehülse 225 hat eine den Zahnkranz 215 hintergreifende Sperrnase 224. Von dieser weg verläuft die der Haltehülse 228 zugewandte Rückseite 260 der Schiebehülse 225 schräg nach außen. Die Haltehülse 228 weist eine unter dem gleichen Winkel geneigte Nase 229 auf, die an der Rückseite 260 anliegt. Die Nase 229 hintergreift also die Schiebehülse 225, so daß die Spitze der Nase 229 axial weiter nach vorne in Richtung Staubkappe 212 zu liegen kommt. Dies ermöglicht ein weiteres Vorverlegen des Verriegelungskörpers 223 gegenüber dem ersten Ausführungsbeispiel. Dadurch können auch Werkzeuge mit sehr kurzem Schaft noch zuverlässig mittels der Staubschutzkappe 212 abgedichtet werden. Die Funktion des fünften Ausführungsbeispiels entspricht genau der des ersten.

Die Erfindung beschränkt sich nicht auf die beschriebenen Ausführungsbeispiele. So können die Einsätze zur Drehmitnahme beispielsweise auch als in Bohrungen eingesetzte gehärtete Spannstifte oder als Schrauben mit in die Aufnahmebohrung hervorstehenden Hartmetalleinsätzen ausgebildet sein. Die Schrauben können gleichzeitig zur Verschraubung von Hammerhülse 4 und Grundkörper 7 dienen.

## Patentansprüche

1. Handbohrmaschine, insbesondere Bohrhammer, mit einer drehend angetriebenen Werkzeughalterung (8) aus einem Grundkörper (7) und darin angeordneter Aufnahmebohrung (9) für Bohr- und/oder Schlagwerkzeuge, welche Werkzeughalterung ein Backenfutter (16) als erste Werkzeugaufnahme und eine gesonderte zweite Werkzeugaufnahme (35) für Werkzeuge mit einem Nutenschaft (10) umfaßt, die ihrerseits mindestens einen radial verschieblichen Verriegelungskörper (23, 123, 223) aufweist, der so ausgebildet ist, daß er in am Schaftende geschlossene Nuten der Werkzeuge (10) einführbar ist und von einem in Grenzen axial beweglichen Sperrelement (24, 151) in seiner Verriegelungsstellung gehalten wird, wobei die zweite Werkzeugaufnahme (35) in Achsrichtung von der Einsteckseite (18) der Werkzeughalterung (8) her gesehen hinter dem Spannbereich des Backenfutters (16) angeordnet ist, und wobei ferner das Sperrelement (24, 151) mittels einer ebenfalls axial verschiebbaren federbelasteten hülsenförmigen Handhabe (25, 26, 125, 126) entriegelbar ist, dadurch gekennzeichnet, daß eine federbelastete, axial verschiebliche Haltehülse (28) vorgesehen ist, die im Bereich des Verriegelungskörpers (23) eine Nase (29) aufweist, die an der Handhabe (25, 26, 125, 126) oder dem Sperrelement (24, 151) anliegend radial nach innen über das Sperrelement (24, 151) hervorsteht und daß die Haltehülse (28) als langgestreckter Körper (30) bis über das hintere Ende der Spannbacken (14) hinausreicht, und dort einen Anschlag (32) für eine auf die Handhabe und die Haltehülse wirkende Druckfeder (33) aufweist, so daß die Haltehülse (28) über die Nase (29) von dem mindestens einen Verriegelungskörper (23, 123, 223) axial nach hinten verschoben werden kann.

2. Handbohrmaschine nach Anspruch 1, dadurch gekennzeichnet, daß die zweite Werkzeugaufnahme (35) in die Werkzeughalterung (8) fest eingesetze Mittel (22) zur Drehmitnahme des in die Werkzeugaufnahme (35) eingesetzten Nutenschaftwerkzeugs (10) aufweist, welche als vorzugsweise gehärtete Einsätze (22) ausgebildet sind, die in Bohrungen oder Schlitzen (21) des Grundkörpers (7) angeordnet sind.

3. Handwerkzeugmaschine nach einem der vorhergehenden Ansprüche, dadurch gekennzeichnet, daß der Grundkörper (7) der Werkzeughalterung (8) einen rückwärtigen Rohrteil (19) aufweist, der an einer Seite abgeflacht und mit einem Längsschlitz (20) für den Durchtritt des Verriegelungskörpers (23) versehen ist.

4. Handwerkzeugmaschine nach Anspruch 1, dadurch gekennzeichnet, daß die Haltehülse (28) Durchbrüche (31) zum Durchtritt der Spannbacken (14) des Backenfutters (16) aufweist.

5. Handwerkzeugmaschine nach einem der vorhergehenden Ansprüche, dadurch gekennzeichnet, daß als Sperrelement ein axial verschieblicher Gleitschieber (151) vorgesehen ist.

6. Handwerkzeugmaschine nach Anspruch 5, dadurch gekennzeichnet, daß der Gleitschieber (151) als Platte mit einer Durchbrechung zum Durchtritt der Haltehülse (128) bzw. ihrer Nase (129) ausgebildet ist.

7. Handwerkzeugmaschine nach Anspruch 5 oder 6, dadurch gekennzeichnet, daß der Gleitschieber (151) in einer Längsführung (150) im Grundkörper (107) geführt ist.

8. Handwerkzeugmaschine nach einem der vorhergehenden Ansprüche, dadurch gekennzeichnet, daß der Verriegelungskörper (223) sich radial innerhalb des Zahnkranzes befindet und die Schiebehülse (225) zumindest mit einer den Verriegelungskörper (223) überdeckenden Sperrnase (224) bis in den Zahnkranz (215) hineinreicht.

## Claims

1. Hand drilling machine, particularly a hammer drill, having a rotationally driven tool holder (8) comprising a base body (7) and a mounting bore (9) arranged therein for drilling and/or percussion tools, said tool holder comprising a jaw chuck (16) as first tool mounting and a separate, second tool mounting (35) which is for tools having a grooved shank (10) and which in turn has at least one radially movable locking body (23, 123, 223) so designed that it can be inserted into grooves, closed at the shank end, in the tools (10) and is held in its locking position by a blocking element (24, 151) axially movable within limits, the second tool mounting (35) being arranged, viewed in the axial direction from the insertion side (18) of the tool holder (8), behind the clamping region of the jaw chuck (16), and the blocking element (24, 151) furthermore being releasable by means of a likewise axially movable, spring loaded sleeve-shaped handle (25, 26, 125, 126), characterized in that a spring loaded, axially movable holding sleeve (28) is provided which in the region of the locking body (23) has a nose (29) which lies against the handle (25, 26, 125, 126) or the blocking element (24, 151) and projects radially inwards beyond the blocking element (24, 151), and in that the holding sleeve (28) extends in the form of an elongated body (30) to a point beyond the rear end of the clamp jaws (14) and there has a stop (32) for a compression spring (33) acting on the handle and the holding sleeve, so that the holding sleeve (28) can be moved, by means of the nose (29), axially rearwards by the at least one locking body (23, 123, 223).

2. Hand drilling machine according to Claim 1, characterized in that the second tool mounting (35) has means (22) which are firmly inserted into the tool holder (8) for rotationally driving the grooved-shank tool (10) inserted into the tool mounting (35), and which are in the form of preferably hardened inserts (22) arranged in bores or slots (21) in the base body (7).

3. Hand machine tool according to one of the preceding claims, characterized in that the base body (7) of the tool mounting (8) has a tubular rear part (19) which on one side is flattened and provided with a longitudinal slot (20) for the passage of the locking body (23).

4. Hand machine tool according to Claim 1, characterized in that the holding sleeve (28) has apertures (31) for the passage of the clamp jaws (14) of the jaw chuck (16).

5. Hand machine tool according to one of the preceding claims, characterized in that the blocking element provided is an axially movable slider (151).

6. Hand machine tool according to Claim 5, characterized in that the slider (151) is in the form of a plate having an aperture for the passage of the holding sleeve (128) or its nose (129).

7. Hand machine tool according to Claim 5 or 6, characterized in that the slider (151) is guided in a longitudinal guide (150) in the base body (107).

8. Hand machine tool according to one of the preceding claims, characterized in that the locking body (223) is situated radially inside the toothed rim and the sliding sleeve (225) extends, at least by a blocking nose (224) overlapping the locking body (223), into the toothed rim (215).

## Revendications

1. Perceuse à main motorisée, notamment à percussion, dans laquelle :
- un support d'outil (8) entraîné en rotation, est constitué d'un corps (7) percé d'un alésage (9) recevant les outils de perçage et/ou de percussion, ce support comprenant un premier réceptacle constitué par un mandrin à mors (16) et un second réceptacle (35) spécial pour forets à queue rainurée (10).
- le second réceptacle (35) comprend au moins un corps de verrouillage (23, 123, 223) coulissant radialement et constitué de manière à pouvoir s'engager dans une rainure fermée prévue dans la queue de l'outil (10) et à être maintenu dans sa position de verrouillage par un organe d'arrêt (24, 151) mobile axialement dans certaines limites.
- le second réceptacle (35) observé en direction axiale depuis la face d'introduction (18) du support de l'outil (8), est situé derrière la zone de serrage du mandrin (16), tandis que l'organe d'arrêt (24, 151) peut être déverrouillé par l'intermédiaire d'une manette (25, 26, 115, 116) en forme de douille, soumise à l'action d'un ressort et mobile axialement,
perceuse caractérisée en ce qu'il est prévu, au niveau du corps de verrouillage (23) une douille de maintien (28) mobile axialement, soumise à l'action d'un ressort et munie d'un téton (29), située au contact de la manette (25, 26, 125, 126) ou de l'organe d'arrêt (24, 151) et dépassant radialement vers l'intérieur par rapport à l'organe d'arrêt (24, 151), cette douille de maintien (28) ayant un corps allongé (30) s'étendant jusqu'au-delà de l'extrémité arrière des mors de serrage (14) et portant à cet endroit une butée (32) de retenue d'un ressort de pression agissant sur la manette ou la douille de maintien, de sorte que la douille de maintien (28) peut être glissée axialement vers l'arrière, au-dessous du téton (29).

2. Perceuse à main selon la revendication 1, caractérisée en ce que le second réceptacle (35) du support d'outil (8) comporte, pour entraîner en rotation l'outil à queue rainurée monté dans le réceptacle (35), des moyeux (22) montés solidaires du réceptacle et constitués de préférence par des inserts (22) en matériau durci, montés dans des perçages ou des fentes (21) du corps (7).

3. Perceuse à main selon l'une des revendications précédentes, caractérisée en ce que le corps (7) du support (8) de l'outil comporte à l'arrière une partie tubulaire (19), aplatie sur un côté et munie d'une fente longitudinale (20) de passage du corps de verrouillage (23).

4. Perceuse à main selon la revendication 1, caractérisée en ce que la douille de maintien (28) présente des ouvertures (31) servant de passages aux mors (14) du mandrin (16).

5. Perceuse à main selon une des revendications précédentes, caractérisée en ce que l'organe d'arrêt est un tiroir coulissant (151) selon une direction axiale.

6. Perceuse à main selon la revendication 5, caractérisée en ce que le tiroir coulissant (151) est constitué par une plaque comportant une ouverture de passage de la douille de maintien (128) c'est-à-dire de son téton (129).

7. Perceuse à main selon la revendication 5 ou 6, caractérisée en ce que le tiroir (151) coulisse dans un guidage longitudinal (150) du corps (107).

8. Perceuse à main selon l'une des revendications précédentes, caractérisée en ce que le corps de verrouillage (223) se trouve, en direction radiale, à l'intérieur de la couronne dentée tandis que la douille coulissante (225) pénètre, par l'intermédiaire d'au moins un téton d'arrêt (224) recouvrant le corps de verrouillage, à l'intérieur de la couronne dentée (215).
